# EUROPÄISCHE PATENTANMELDUNG

(11) **EP 0 823 214 A2**
(43) Veröffentlichungstag der Anmeldung: **11.02.1998**
(21) Anmeldenummer: 97113505.8
(22) Anmeldetag: 05.08.1997
(51) Int. Cl.: A01N 59/04, D06B 1/04, D06M 11/76

(54) **Verfahren zur Bekämpfung von Hausstaubmilben unter Kälteeinwirkung**

(30) Priorität: 08.08.1996 DE 19632083; 14.08.1996 DE 19632797
(71) Anmelder: Linde Aktiengesellschaft, 65189 Wiesbaden (DE)
(72) Erfinder: Rebhan, Dieter, Dipl.-Ing., 82538 Geretsried (DE); Buinger, Alexander, Dipl.-Phys., 81477 München (DE)
(74) Vertreter: Kasseckert, Rainer

(57) **Zusammenfassung**

Die Erfindung betrifft ein Verfahren zur Bekämpfung von Hausstaubmilben auf und/oder in textilen Gegenständen unter Kälteeinwirkung. Die textile Gegenstände umfassen insbesondere Matratzen, Bettwäsche, Bettdecken, Polstermöbel, Teppiche, Kleidung oder dergleichen.

Erfindungsgemäß beruht die Kälteeinwirkung im wesentlichen auf der Verwendung von kaltem Kohlendioxid (CO₂) in festem Aggregatzustand (Trockeneis).

Dieses wird bevorzugt in Form von Schnee, Pellets und/oder Platten eingesetzt. Mit Vorteil werden die textilen Gegenstände zumindestens teilweise mit Trockeneis flächig bedeckt oder umhüllt. Die Wirkung des CO₂ kann durch Verwendung einer Folie oder eines Behälters verstärkt werden. Die erfindungsgemäße Kälteanwendung mittels Kohlendioxid kann in Verbindung mit einer Saugbehandlung und/oder Bestrahlung durchgeführt werden.

## Beschreibung

Die Erfindung betrifft ein Verfahren zur Bekämpfung von Hausstaubmilben auf und/oder in textilen Gegenständen, insbesondere Matrazen, Bettwäsche, Bettdecken, Polstermöbel, Teppiche, Kleidung oder dergleichen, unter Kälteeinwirkung.

In der DE 43 42 876 C2 ist ein Verfahren und eine Vorrichtung zur Reinigung und Beseitigung von Hausstaubalergenen, insbesondere Hausstaubmilben und deren Ausscheidungen, aus textilen Gegenständen beschrieben. Unmittelbar vor oder gleichzeitig mit einer Saugbehandlung wird Stickstoff im gasförmigen Aggregatzustand mit einer Temperatur unterhalb 18 °C bevorzugt von -50 °C bis -195,80 °C, in den textilen Gegenstand eingeleitet. Dadurch werden die Hausstaubalergieverursacher, nämlich die Hausstaubmilben, abgetötet. Stickstoff wird in flüssigem Aggregatzustand in einem Behälter bevorratet.

In Weiterbildung des in DE 43 42 846 C2 beschriebenen Verfahrens lehrt die DE 195 19 494 C1 ein Verfahren, bei dem an Stelle von Stickstoff nunmehr Kohlendioxid eingesetzt wird. Das Kohlendioxid wird gasförmig auf den textilen Gegenstand gesprüht, wobei flüssiges Kohlendioxid in einem Vorratsbehälter bei einer Temperatur zwischen -56,6 °C und -78,5 °C aufbewahrt wird und auf dem Weg über die Zuleitungen, Verteilerleitungen und Auslaßdüsen von seinem flüssigen in seinem gasförmigen Aggregatzustand übergeht.

Die Verfahren nach dem Stand der Technik weisen aber eine ganze Reihe von Nachteilen auf. So muß flüssiger Stickstoff in gut isolierten Behältern transportiert werden. Der abtötende Effekt beim Einsatz von Stickstoff liegt allein in der Kältewirkung, da Stickstoff im Hinblick auf ein Abtöten durch Sauerstoffmangel relativ unwirksam und ungiftig ist. Die Anwendung von Stickstoff bei Temperaturen unterhalb von -100 °C kann ferner zu Beschädigungen der textilen Gegenstände führen.

Die vorherige Verdampfung zur Kaltgaserzeugung des in flüssigem Aggregatzustand bevorrateten Stickstoffs oder Kohlendioxids nach dem Stand der Technik erfordert einen hohen aparativen Aufwand.

Zur Verringerung des aparativen Aufwands wäre eine Anwendung von flüssigem Stickstoff direkt auf die textilen Gegenstände denkbar. Hierbei sind jedoch die oben angesprochenen Kälteschäden an den textilen Gegenständen zu erwarten.

Der Erfindung liegt daher die Aufgabe zugrunde, ein Verfahren der eingangs genannten Art aufzuzeigen, welches eine appartiv einfache, aber gleichwohl wirksame Bekämpfung von Hausstaubmilben ermöglicht.

Diese Aufgabe wird erfindungsgemäß dadurch gelöst, daß die Kälteeinwirkung im wesentlichen auf der Verwendung von kaltem Kohlendioxid (CO₂) in festem Aggregatzustand (Trockeneis) beruht.

Die Verwendung von Kohlendioxid in festem Aggregatzustand gestaltet sich wesentlich einfacher als das Gewinnen und Versprühen von gasförmigem Kohlendioxid aus der Flüssigphase. Kohlendioxid in festem Aggregatzustand (Trockeneis) sublimiert bei Erwärmung, im Regelfall durch Temperaturausgleich mit der Umgebung, und produziert so eine kalte Inertgasatmosphäre am und/oder um den textilen Gegenstand. Die Temperatur des gasförmigen Kohlendioxids kurz nach der Sublimierung beträgt etwa -75 °C. Milben werden bei dieser Temperatur sicher abgetötet. Andererseits ist bei diesen Temperaturen eine Beschädigung der textilen Gegenstände nicht zu befürchten. Im Gegensatz zu Stickstoff hat Kohlendioxid eine toxische Wirkung und wirkt außerdem bakterizid. Hierin liegt ein wesentlicher Grund für den Einsatz von Kohlendioxid an Stelle von Stickstoff.

Mit Vorteil wird das Kohlendioxid in festem Aggregatzustand in Form von Schnee, Pellets und/oder Platten eingesetzt. Bevorzugt werden die textilen Gegenstände zumindest teilweise mit Trockeneis flächig bedeckt oder umhüllt. Dadurch wird eine für das Abtöten der Milben hinreichende Kälteübertragung sichergestellt. Vorteilhafterweise wird das Trockeneis mit einer Schichtdicke von 1 bis 50 cm, vorzugsweise von 2 bis 10 cm, eingesetzt.

Pellets lassen sich besonders leicht auf den textilen Gegenständen verteilen. Mit Vorteil werden dabei Pellets mit einem mittleren Durchmesser von 0,5 bis 25 mm, vorzugsweise von 1,5 bis 15 mm, verwendet. Beispielsweise werden aus diesem Vorzugsbereich Pellets mit einem mittleren Durchmesser von 1, 3, 5 oder 10 mm eingesetzt.

Zum Schutz gegen kondensierte Luftfeuchte kann auf oder um die textilen Gegenstände eine Folie, ein Behälter oder dergleichen vorgesehen sein. Beispielsweise ist dazu eine Folie aus Kunststoff geeignet, die gegebenenfalls mit einem Reißverschluß oder einem anderen Verschlußsystem ausgestattet sein kann. Diese kann um den textilen Gegenstand angebracht werden, bevor oder nachdem das Trockeneis aufgebracht wird. Diese erste Möglichkeit der Anwendung der Folie ermöglicht allerdings keine toxische Einwirkung des CO₂ auf die Milben, weil die Folie einen direkten Kontakt verhindert. Nach einer zweiten, bevorzugten Lösung ist daher vorgesehen, den textilen Gegenstand mit dem Trockeneis in direkten Kontakt zu bringen und mit einer Folie (beispielsweise mit einem Reißverschluß versehen), mit einem Behälter beispielsweise aus Kunststoff, oder mit dergleichen zu umschließen. Dabei muß die Möglichkeit eines Druckausgleichs, beispielsweise über Öffnungen, vorgesehen sein, damit das sublimierte Kohlendioxid keinen zu hohen Druck innerhalb der Folie bzw. innerhalb des Behälters aufbaut. Nach einem vollständigen Sublimieren des CO₂ können diese Druckausgleichsöffnungen verschlossen werden, beispielsweise über Rückschalgventile, um das Einströmen von Luft und damit die Gefahr der Kondensation von Luftfeuchte auch noch zusätzlich nach dem Sublimieren zu verhindern. Diese zweite Möglichkeit erlaubt sowohl eine stärkere Konzentration der Kältewirkung als auch eine Verstärkung der toxischen Wirkung des CO₂ dadurch, daß ein rasches oder zu schnelles Abströmen des CO₂ unterbunden wird. Dabei wird das CO₂ sehr wirtschaftlich genutzt.

In Ausbildung der Erfindung können die textilen Gegenstände teilweise einem kalten Gasstrom aus sublimierten Kohlendioxid ausgesetzt werden. Dadurch kann die Kälteeinwirkung auf die textilen Gegenstände verstärkt werden.

In Weiterbildung der Erfindung wird die Kälteanwendung durch Kohlendioxid in festem Aggregatzustand in Verbindung mit einer Saugbehandlung, beispielsweise wie in der Patentschrift DE 43 42 876 C2 oder DE 195 19 494 C1 beschrieben, durchgeführt. Allerdings können die dort notwendigen Vorratbehälter für verflüssigte Gase, Zuleitungen, Verteilerleitungen und Auslaßdüsen entfallen. Darüber hinaus können im erfindungsgemäßen Verfahren mechanische Schwingungen zum Lösen der getöteten Milben und deren Ausscheidungen zur Anwendung kommen. Außerdem können die textilen Gegenstände einer UV-Bestrahlung und/oder einer anderen geeigneten Strahlung ausgesetzt werden.

## Patentansprüche

1. Verfahren zur Bekämpfung von Hausstaubmilben auf und/oder in textilen Gegenständen, insbesondere Matrazen, Bettwäsche, Bettdecken, Polstermöbel, Teppiche, Kleidung oder dergleichen, unter Kälteeinwirkung, **dadurch gekennzeichnet**, daß die Kälteeinwirkung im wesentlichen auf der Verwendung von kaltem Kohlendioxid (CO₂) in festem Aggregatzustand (Trockenes) beruht.

2. Verfahren nach Anspruch 1, dadurch gekennzeichnet, daß Kohlendioxid in festem Aggregatzustand in Form von Schnee, Pellets und/oder Platten eingesetzt wird.

3. Verfahren nach einem der Ansprüche 1 oder 2, dadurch gekennzeichnet, daß die textilen Gegenstände zumindest teilweise mit Trockenes flächig bedeckt oder umhüllt werden.

4. Verfahren nach Anspruch 3, dadurch gekennzeichnet, daß das Trockeneis mit einer Schichtdicke von 1 bis 50 cm, vorzugsweise von 2 bis 10 cm, eingesetzt wird.

5. Verfahren nach einem der Ansprüche 1 bis 4, dadurch gekennzeichnet, daß Pellets mit einem mittleren Durchmesser von 0,5 bis 25 mm, vorzugsweise von 1,5 bis 15 mm, verwendet werden.

6. Verfahren nach einem der Ansprüche 1 bis 5, dadurch gekennzeichnet, daß auf oder um die textilen Gegenstände eine Folie oder ein Behälter zum Schutz gegen kondensierte Luftfeuchte vorgesehen wird.

7. Verfahren nach einem der Ansprüche 1 bis 6, dadurch gekennzeichnet, daß die textilen Gegenstände teilweise einem kalten Gasstrom aus sublimiertem Kohlendioxid ausgesetzt werden.

8. Verfahren nach einem der Ansprüche 1 bis 7, dadurch gekennzeichnet, daß die Kälteanwendung durch Kohlendioxid in Verbindung mit einer Saugbehandlung und/oder mit einer Bestrahlung durchgeführt wird.
